# EUROPÄISCHE PATENTSCHRIFT

(11) **EP 1 094 209 B1**
(45) Veröffentlichungstag und Bekanntmachung des Hinweises auf die Patenterteilung: **27.04.2005**
(21) Anmeldenummer: 00122410.4
(22) Anmeldetag: 13.10.2000
(51) Int. Cl.: F02B 27/02

(54) **Luftansaugvorrichtung**
Air suction device
Dispositif d'aspiration de l'air

(30) Priorität: 23.10.1999 DE 19951083
(43) Veröffentlichungstag der Anmeldung: 25.04.2001
(73) Patentinhaber: Mann + Hummel GmbH, 71638 Ludwigsburg (DE)
(72) Erfinder: Leipelt, Rudolf, 74394 Hessigheim (DE); Weber, Olaf, Dr., 71292 Friolzheim (DE)
(74) Vertreter: Voth, Gerhard, Dipl.-Ing.

(56) Entgegenhaltungen:
- DE-A- 19 729 217
- DE-A- 19 841 810
- US-A- 4 543 918
- PATENT ABSTRACTS OF JAPAN vol. 1997, no. 04, 30. April 1997 (1997-04-30) & JP 08 326546 A (MITSUBISHI MOTORS CORP), 10. Dezember 1996 (1996-12-10)

## Beschreibung

Die Erfindung betrifft eine Luftansaugvorrichtung für Brennkraftmaschinen nach dem Oberbegriff des unabhängigen Anspruchs 1.

### Stand der Technik

Aus der DE 197 17 272 ist eine Luftansauganlage für eine Brennkraftmaschine bekannt. Diese weist einen Luftsammler auf und einzelne Saugstränge zu den einzelnen Zylindern. Den Saugsträngen sind schaltbare Saugrohrverlängerungen zugeordnet. Diese Saugrohrverlängerungen umfassen Stelleinrichtungen mit Wippenanordnungen und Hebeln in der Art von Vier-Gelenken. Ein Nachteil dieses Aufbaus liegt in der komplizierten Antriebsmechanik der Saugrohrverlängerungen. Insbesondere bei Brennkraftmaschinen, die in Fahrzeugen verwendet werden, besteht die Gefahr, daß durch Umwelteinflüsse diese mechanischen Komponenten beeinträchtigt werden. Ein Ausfall der Mechanik führt unweigerlich zu einem Leistungsverlust.

Es sind weiterhin Luftansaugvorrichtungen für Brennkraftmaschinen bekannt, die Ansaugleitungen aus einem flexiblen Schlauch aufweisen. Dieser flexible Schlauch ist zwar innerhalb eines geschlossenen Systems angeordnet. Ein Nachteil dieses Aufbaus besteht jedoch darin, daß der Schlauch aufgrund seiner Flexibilität an seinen Wänden gerippt ist und damit den Luftdurchflußwiderstand unnötig erhöht.

Aus der US-A 4,543,918 ist eine Luftansaugvorrichtung einer Brennkraftmaschine zu entnehmen, mit wenigstens einem Sammelbehälter und getrennt zu den einzelnen Zylindem der Brennkraftmaschine abzweigende Ansaugleitungen, wobei die Ansaugleitungen sich bis in den Sammelbereich erstrecken und wenigstens teilweise aus einem flexiblen Element gebildet sind und wobei die Ansaugleitungen längenvariable Bereiche aufweisen und diese Bereiche in Segmente unterteilt sind.

Die DE 198 41 810 A beschreibt eine schaltbare Luftansauganlage für Brennkraftmaschinen mit einem mehrteiligen Schwingrohr je Zylinder der Brennkraftmaschine, das sich aus ortsfesten und mindestens einem verschieblichen Schwingrohrelement zusammensetzt. Das verschiebliche Schwingrohrelement ist so ausgebildet, dass es mit den festen Schwingrohrelementen in Abhängigkeit von seinem Verschiebeweg drei separate Schwingrohrlängen einstellen kann.

Der Erfindung liegt die Aufgabe zugrunde, eine Luftansaugvorrichtung zu schaffen, die die Leistung der Brennkraftmaschine positiv beeinflußt, einfach und zuverlässig aufgebaut ist sowie den Durchflußwiderstand nicht wesentlich erhöht. Diese Aufgabe wird ausgehend von den Merkmalen des Oberbegriffs des unabhängigen Anspruchs 1 durch dessen Kennzeichen gelöst.

Der wesentliche Vorteil der Erfindung liegt darin, daß die Ansaugleitungen voneinander unterschiedliche Bereiche aufweisen und ein Ab- und Ankoppeln von Segmenten möglich ist. Gemäß der Erfindung ist an ein starres Element ein dreh- oder längsbewegliches Element angekoppelt und das weitere Element als starres Element ausgebildet. Das längsbewegliche Element ist an den Koppeistellen mit längenvariablen Bereichen ausgestattet.

Gemäß einer Ausgestaltung der Erfindung sind die Segmente längs verschieblich angeordnet. Dies ist insbesondere dort zweckmäßig, wo die Segmente aus kurzen Rohrstücken bestehen. Selbstverständlich besteht dort die Möglichkeit, längs verschiebliche Segmente mit drehbaren Segmenten zu kombinieren, um so den vorhandenen Bauraum optimal auszunutzen.

Weiterbildungsgemäß sind die Segmente an ihren Koppelstellen mit Radial- und/oder Axialdichtungen versehen. Diese Dichtungen gewährleisten eine optimale Verbindung und verhindern das Einströmen von Falschluft.

Die Erfindung wird nachfolgend anhand von Ausführungsbeispielen in den Figuren 5, 6 und 7 näher erläutert. Die Figuren 1 bis 4 sind Beispiele, die nicht von der Erfindung erfaßt werden.
Figuren 1 a - c zeigen eine Luftansaugvorrichtung mit zwei beweglichen Segmenten,
Figuren 2 a - c zeigen eine erste Variante der Luftansaugvorrichtung,
Figuren 3a - c zeigen eine weitere Variante einer Luftansaugvorrichtung,
Figuren 4 a - c zeigen eine Luftansaugvorrichtung mit einem flachen Gehäuseaufbau,
Figuren 5 a - c zeigen eine Ansaugvorrichtung mit längs verschieblichem Zwischenelement,
Figuren 6 a - c zeigen eine Detailansicht des in Figur 5 beschriebenen Zwischenelements,
Figuren 7 a - c zeigen ein System mit einem axial beweglichen Zwischenelement.

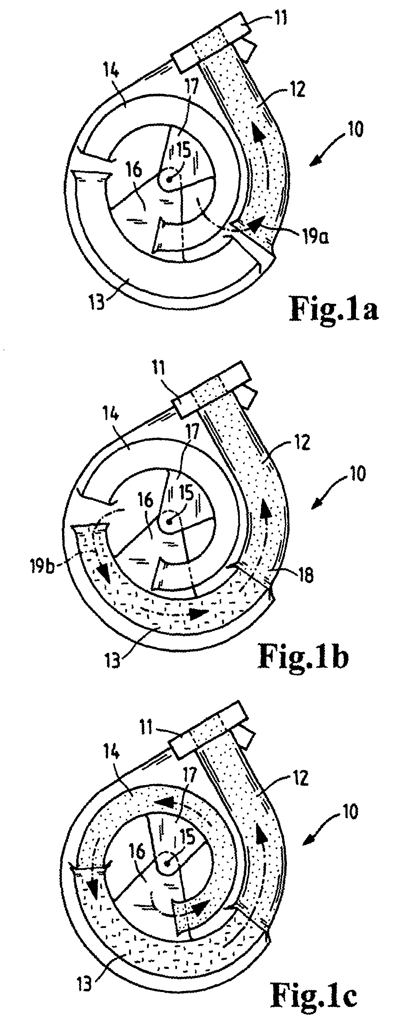

Die Luftansaugvorrichtung besteht aus einem Gehäuse 10, welches mit einem Flansch 11 versehen ist zum Befestigen des Gehäuses an einer hier nicht dargestellten Brennkraftmaschine. Ausgehend von dem Flansch 11 ist ein starres Ansaugrohr 12 in dem Gehäuse 10 angeordnet. Diesem Ansaugrohr schließen sich zwei bewegliche Ansaugrohrsegmente 13, 14 an. Diese Ansaugrohrsegmente sind an einem gemeinsamen Drehpunkt 15 drehbar gelagert. Die Befestigung der Ansaugrohrsegmente 13, 14 erfolgt über eine geeignete Trägerstruktur 16, 17. In der in Figur 1 a gezeigten Stellung sind die Ansaugrohrsegmente 13, 14 voneinander beabstandet, d.h. die Ansaugluft für die Brennkraftmaschine strömt unmittelbar gemäß dem Pfeil 19a in das Ansaugrohr 12 und von dort zu der Brennkraftmaschine. Diese Stellung ist die sogenannte Leistungsstellung und erzielt bei hohen Drehzahlen der Brennkraftmaschine ein hohes Drehmoment.

Figur 1 b zeigt die Luftansaugvorrichtung, bei welcher das Ansaugrohrsegment 13 an das Ansaugrohr 12 angekoppelt ist. Hierzu sind entsprechende Koppeldichtungen 18 vorgesehen. Nunmehr strömt die Luft gemäß dem Pfeil 19b über das Ansaugrohrsegment 13 und das Ansaugrohr 12 in die Brennkraftmaschine. Diese Stellung sorgt insbesondere bei niedrigen Motordrehzahlen für ein optimales Drehmoment.

Figur 1 c zeigt die Ankopplung des Ansaugrohrsegements 14 an dem Segment 13 und dem Ansaugrohr 12. Nun strömt die Luft über den längsten Rohrweg in die Brennkraftmaschine. Geeignete Dichtungen zwischen den einzelnen Segmenten sorgen für eine zuverlässige Abdichtung.

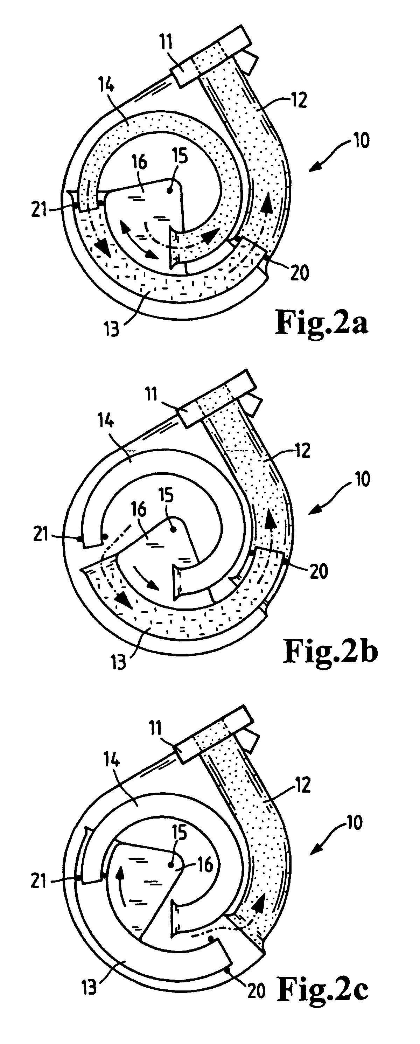

Die Figuren 2 a - c zeigen eine erste Variante der Luftansaugvorrichtung.

Zwischen den einzelnen Segmenten 13, 14 und dem Ansaugrohr 12 sind längenvariable Dichtungen 20, 21 vorgesehen. In der in Figur 2 a gezeigten Stellung bildet die Luftansaugvorrichtung den längsten Ansaugweg.

Figur 2 b zeigt die Entkoppelung des Segments 14. Gleichzeitig ist das Segment 13 teilweise in das Ansaugrohr 12 eingetaucht.

In Figur 2 c ist das Segment 13 von dem Ansaugrohr 12 weggeschwenkt. Die Ansaugluft strömt unmittelbar in das Ansaugrohr 12.

Der Vorteil des in Figur 2 gezeigten Aufbaus liegt darin, daß das Segment 14 selbst starr in dem Gehäuse angeordnet ist. Lediglich das Segment 13 ist schwenkbar gelagert. Über die axial verschiebbaren Lager 20, 21 kann die Verschwenkung des Segments 13 erfolgen.

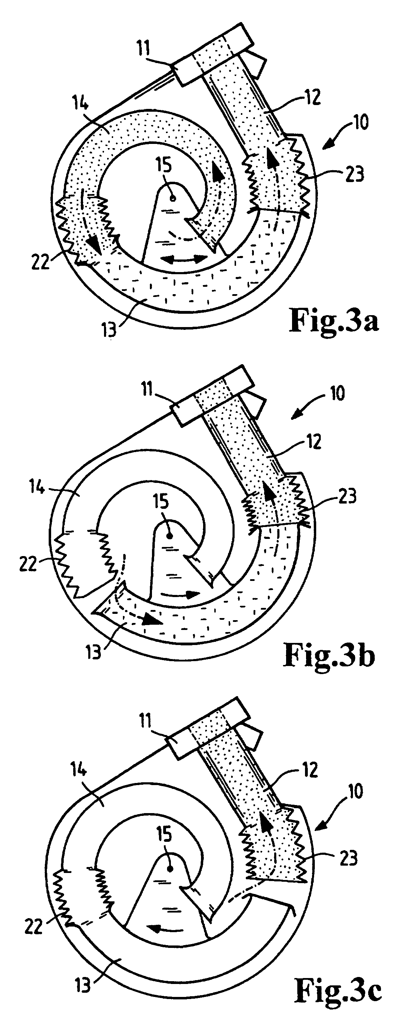

Figur 3 a - c zeigt eine weitere Variante einer Luftansaugvorrichtung. Dort ist wiederum das Segment 14 starr im Gehäuse 10 angeordnet. An diesem Segment sowie an dem Ansaugrohr 12 sind flexible Anschlußbereiche 22, 23 vorgesehen. Die Verschwenkung des Segments 13 bewirkt ein Stauchen oder Dehnen dieser Anschlußbereiche und damit, wie in Figur 3 b gezeigt, ein Öffnen zwischen dem Segment 13 und dem Segment 14 und, wie in Figur 3 c gezeigt, ein Öffnen zwischen dem Ansaugrohr 12 und dem Segment 13.

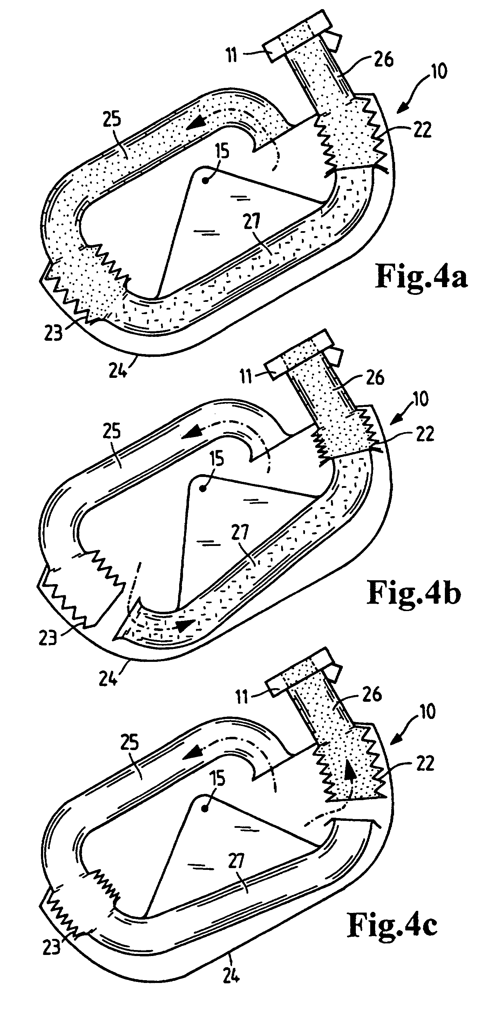

Die Figuren 4 a - c zeigen eine Luftansaugvorrichtung mit einem flachen Gehäuseaufbau. Das Gehäuse 24 ist mit einem Segment 25 und einem Ansaugrohr 26 versehen. In dem Gehäuse ist drehbar ein Schwenkelement 27 gelagert. Eine Drehung des Schwenkelements 27 entgegen dem Uhrzeigersinn führt zu einer Stauchung des Ansaugbereiches 22 und gleichzeitig zu einer Öffnung zwischen dem Segment 25 und dem Schwenkelement 27. Eine Drehung dieses Schwenkelements 27 in Richtung des Uhrzeigersinns führt zu einer Stauchung des Anschlußbereichs 23 und zu einem Öffnen des Ansaugrohrs 26. In dieser Stellung strömt die Ansaugluft unmittelbar in das kurze Ansaugrohr ein.

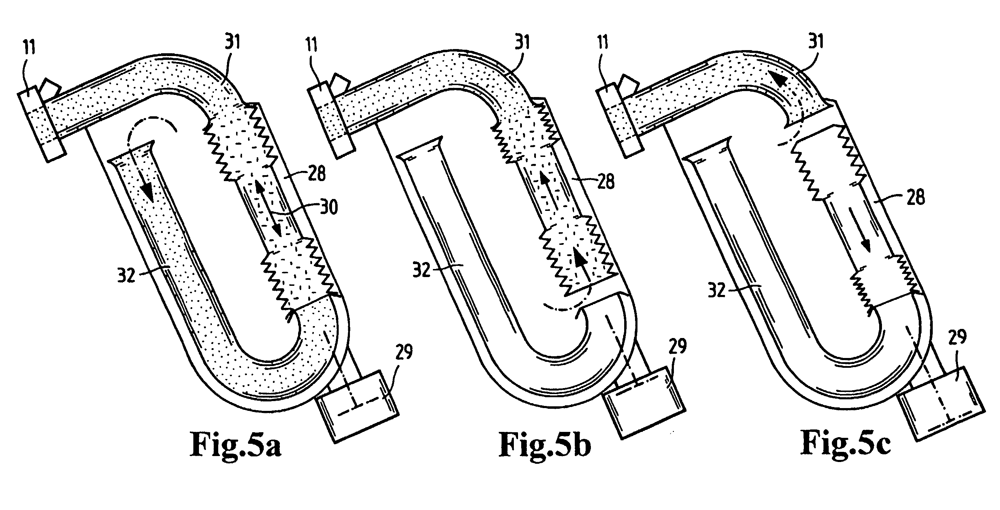

Die Figur 5 a - c zeigt eine Ansaugvorrichtung mit längs verschieblichem Zwischenelement. Das Zwischenelement 28 wird über einen Kolben 29 gemäß dem Pfeil 30 längs bewegt. In der in Figur 5 a gezeigten Stellung verbindet es das Ansaugrohr 31 mit dem Element 32.

In Figur 5 b ist das Zwischenelement 28 in Richtung des Ansaugrohres 31 geschoben.

In der Stellung gemäß Figur 5 c ist das Zwischenelement in die Gegenrichtung geschoben und öffnet das Ansaugrohr 31 für einen kurzen Ansaugkanal.

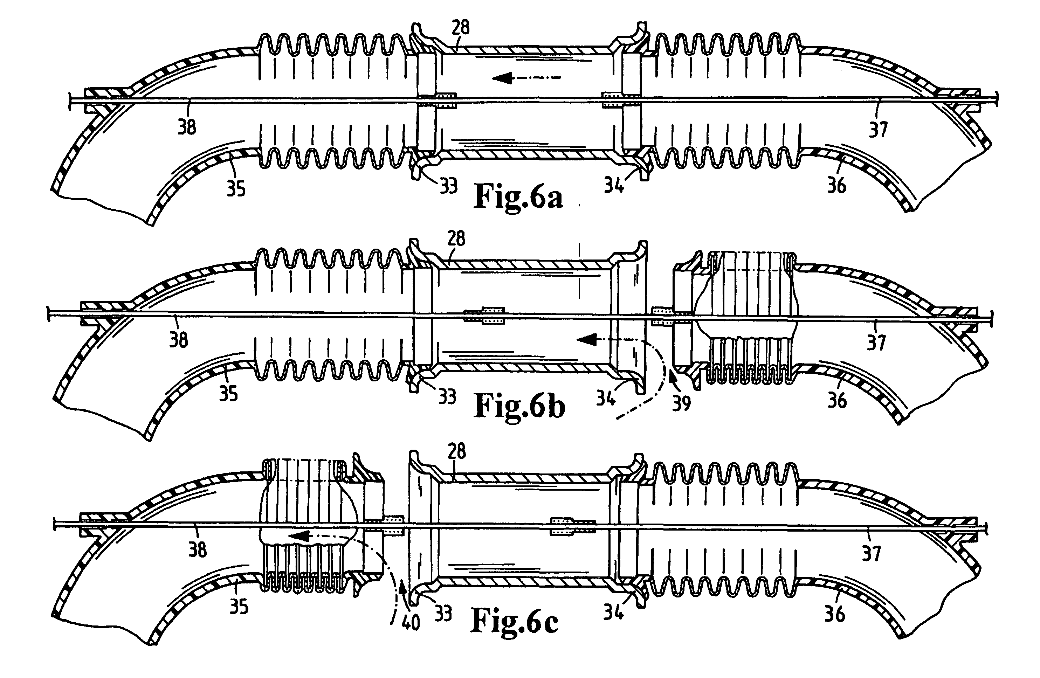

Figur 6 a - c zeigt eine Detailansicht des in Figur 5 beschriebenen Zwischenelements 28. Dieses Zwischenelement trägt an seinen axialen Enden Öffnungstrichter 33, 34, die in der in Figur 6 a gezeigten Stellung die flexiblen Enden der beiden Rohrstücke 35, 36 aufnehmen. Das Zwischenelement 28 ist in dem dargestellten Beispiel starr angeordnet. Dies bedeutet, daß keiner der Rohrabschnitte beweglich gelagert ist. Lediglich die flexiblen Enden der beiden Rohre 35, 36 sind über Schieber 37, 38 längs verschiebbar.

Figur 6 b zeigt eine Bewegung des Schiebers 37 nach rechts. Dadurch wird ein Kanal 39 geöffnet.

Figur 6 c zeigt eine Bewegung des Schiebers 38 nach links. Dadurch wird der Kanal 40 geöffnet.

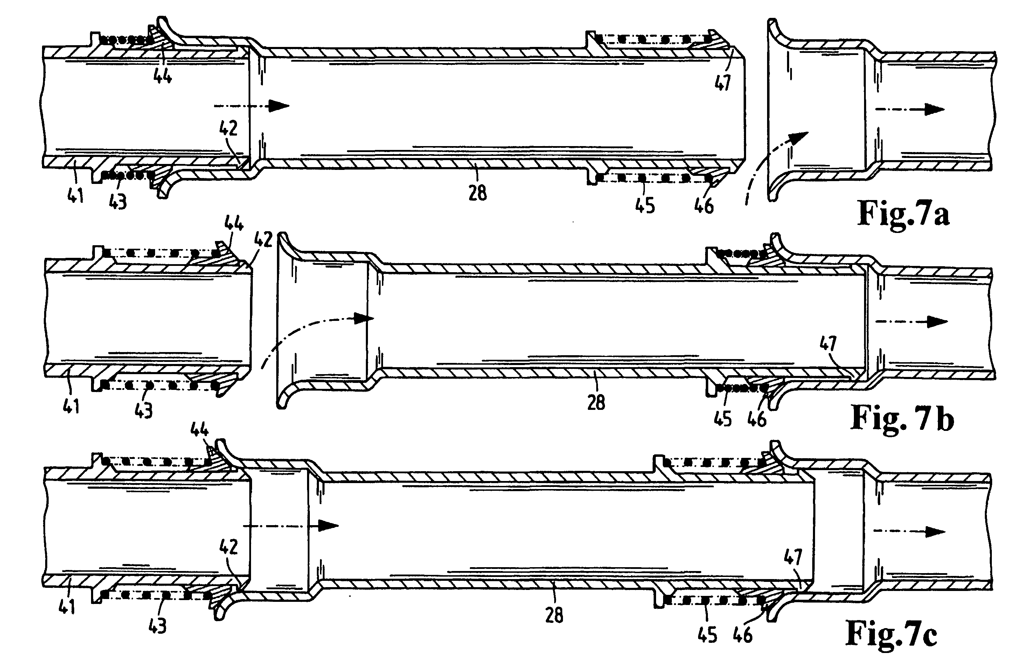

Die Figur 7 zeigt ein System mit einem axial beweglichen Zwischenelement 28.

Figur 7 a zeigt das Zwischenelement in einer nach links geschobenen Stellung. Die Abdichtung zwischen dem Zwischenelement 28 und dem Rohr 41 erfolgt über eine Radialdichtung 42 sowie über ein mit einer Druckfeder 43 beaufschlagtes Dichtelement 44.

Figur 7 b zeigt das Zwischenelement 28 in einer nach rechts geschobenen Stellung. Die Abdichtung erfolgt wie auf der gegenüberliegenden Seite mittels einer Druckfeder 45, einem Dichtelement 46 und einer Radialdichtung 47.

Figur 7 c zeigt das Zwischenelement 28 in der Mittelstellung, in welcher beidseitig eine Abdichtung erfolgt.

## Patentansprüche

1. Luftansaugvorrichtung für Brennkraftmaschinen mit wenigstens einem Sammelbehälter und getrennt zu den einzelnen Zylindern der Brennkraftmaschine abzweigende Ansaugleitungen, wobei die Ansaugleitungen sich bis in den Sammelbehälter erstrecken und wenigstens teilweise aus einem flexiblen Element gebildet sind, wobei die Ansaugleitungen starre oder längenvariable Bereiche aufweisen und diese Bereiche in wenigstens zwei, voneinander unabhängig beweglich angeordnete Segmente (13, 14) unterteilt sind, **dadurch gekennzeichnet, daß** das an den Zylinderkopf einer Brennkraftmaschine anflanschbare erste Element ein starres Element (16) ist, das nachfolgende Element ein dreh- oder längsbewegliches Element (27) das nachfolgende Element ein starres Element (25) ist und das dreh- oder längsbewegliche Element an den Koppelstellen längenvariable Bereiche aufweist.

2. Luftansaugvorrichtung nach Anspruch 1, **dadurch gekennzeichnet, daß** Segmente (28) längsverschieblich angeordnet sind.

3. Luftansaugvorrichtung nach einem der vorherigen Ansprüche, **dadurch gekennzeichnet, daß** die Segmente Koppelstellen (18) aufweisen, welche mit Radialund/oder Axialdichtungen versehen sind.

## Claims

1. Air intake apparatus for internal combustion engines, said apparatus having at least one collection manifold and intake ducts branching off separately to the individual cylinders of the internal combustion engine, wherein the intake ducts extend into the collection manifold and are formed at least partially from a resilient element, wherein the intake ducts have rigid or variable-length regions and these regions are divided into at least two segments (13, 14), which are disposed so as to be displaceable independently of one another, **characterised in that** the first element, which is flange-connectable to the cylinder head of an internal combustion engine, is a rigid element (16), the following element is a rotatable or longitudinally displaceable element (27), the following element is a rigid element (25) and the rotatable or longitudinally displaceable element includes variable-length regions at the coupling points.

2. Air intake apparatus according to claim 1, **characterised in that** segments (28) are disposed so as to be longitudinally displaceable.

3. Air intake apparatus according to one of the preceding claims, **characterised in that** the segments include coupling points (18), which are provided with radial and/or axial sealing means.

## Revendications

1. Dispositif d'aspiration d'air pour moteurs à combustion interne comprenant au moins un récipient collecteur et des conduites d'aspiration déviées séparément vers les différents cylindres du moteur à combustion interne, les conduites d'aspiration s'étendant jusqu'au récipient collecteur et étant formées au moins partiellement d'un élément flexible, les conduites d'aspiration présentant des zones rigides ou variables en longueur divisées en au moins deux segments (13, 14) disposés de façon mobile indépendamment l'un de l'autre,
**caractérisé en ce que**
le premier élément pouvant être bridé sur la tête de cylindre d'un moteur à combustion interne est un élément rigide (16), l'élément suivant est un élément (27) mobile en rotation ou dans le sens de la longueur, l'élément suivant est un élément rigide (25), et l'élément mobile en rotation ou dans le sens de la longueur présente des zones variables en longueur au niveau des points de couplage.

2. Dispositif d'aspiration d'air selon la revendication 1,
**caractérisé en ce que**
des segments (28) sont disposés de façon mobile dans le sens de la longueur.

3. Dispositif d'aspiration d'air selon l'une quelconque des revendications précédentes,
**caractérisé en ce que**
les segments présentent des points de couplage (18) munis de garnitures d'étanchéité radiales et/ou axiales.
